(19) Europäisches Patentamt / European Patent Office / Office européen des brevets

(11) **EP 2 502 047 B1**

(12) **FASCICULE DE BREVET EUROPEEN**

(45) Date de publication et mention
de la délivrance du brevet:
**15.11.2017 Bulletin 2017/46**

(21) Numéro de dépôt: **10779010.7**

(22) Date de dépôt: **15.11.2010**

(51) Int Cl.:
**G01N 3/32** *(2006.01)*          **G01M 5/00** *(2006.01)*
**G07C 3/00** *(2006.01)*

(86) Numéro de dépôt international:
**PCT/EP2010/067455**

(87) Numéro de publication internationale:
**WO 2011/061141 (26.05.2011 Gazette 2011/21)**

(54) **SYSTEME ET PROCEDE DE MESURE DE FATIGUE POUR PIECES MECANIQUES D'UN AERONEF ET PROCEDE DE MAINTENANCE DE L'AERONEF**

SYSTEM UND VERFAHREN ZUR MESSUNG DER ERMÜDUNG VON MECHANISCHEN KOMPONENTEN EINES FLUGZEUGES UND FLUGZEUGWARTUNGSVERFAHREN

SYSTEM AND METHOD FOR MEASURING FATIGUE FOR MECHANICAL COMPONENTS OF AN AIRCRAFT AND AIRCRAFT MAINTENANCE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2009 FR 0958123**

(43) Date de publication de la demande:
**26.09.2012 Bulletin 2012/39**

(73) Titulaire: **Safran Aircraft Engines**
**75015 Paris (FR)**

(72) Inventeur: **SEIZE, Guilhem**
**F-94230 CACHAN (FR)**

(74) Mandataire: **Gevers & Orès**
**41 avenue de Friedland**
**75008 Paris (FR)**

(56) Documents cités:

| | |
|---|---|
| **EP-A2- 0 339 833** | **EP-A2- 1 791 047** |
| **WO-A1-00/25272** | **WO-A1-2004/068095** |
| **US-A- 4 336 595** | **US-A- 5 195 046** |
| **US-A- 5 531 122** | **US-A1- 2002 154 029** |
| **US-A1- 2006 069 521** | **US-A1- 2006 243 055** |
| **US-A1- 2007 107 530** | **US-A1- 2008 167 833** |
| **US-B1- 6 449 565** | |

EP 2 502 047 B1

**Description**

L'invention concerne un système et un procédé de mesure de fatigue pour pièces mécaniques d'un aéronef, par exemple un avion, ainsi qu'un procédé de maintenance de l'aéronef.

Les règles de sécurité imposent aux compagnies aériennes un suivi de la fatigue des pièces des aéronefs qu'elles exploitent, ces pièces étant soumises à un grand nombre de contraintes (ou charges) mécaniques. Les pièces font ainsi l'objet d'une révision (ou maintenance) de manière régulière et récurrente.

Par exemple, les pièces des suspensions des turboréacteurs aux avions sont soumises à des contrôles sévères. Or, chaque révision d'une suspension impose d'arrêter l'exploitation de l'avion et de démonter la suspension pour procéder aux tests. La périodicité des révisions est déterminée à l'avance et une révision est faite, de manière systématique, à l'expiration de chaque période de temps pré-établie (par exemple tous les 2600 cycles de vol (décollage-vol-atterrissage)), quel que soit l'état de fatigue réel de la pièce. Afin de ne pas prendre le risque de procéder à une révision trop longtemps après l'apparition d'un état de fatigue nécessitant une intervention telle qu'une réparation ou un remplacement, cette période de temps doit être choisie (par calcul ou de manière empirique) comme étant la période minimale au-dessus de laquelle il existe un risque que la pièce casse, même si ce risque reste marginal statistiquement. Cette période minimale correspond donc aux cas des pièces soumises à des contraintes accidentelles ; de ce fait, de nombreuses révisions sont faites sur des pièces qui auraient pu sans danger être utilisées plus longtemps puisqu'elles n'ont pas été soumises à des contraintes accidentelles. Finalement, en l'absence d'analyse des contraintes réelles auxquelles a été soumise une pièce, on prend toujours le pire scénario quant à l'endommagement possible de cette dernière, ce qui conduit à des révisions souvent anticipées.

De plus, et par sécurité, les pièces sont utilisées moins longtemps qu'elles ne pourraient l'être réellement, pour ne pas atteindre des durées d'utilisation pendant lesquelles le risque de rupture dépasse un certain seuil. De nouveau, en l'absence d'analyse des conditions réelles d'utilisation des pièces, on choisit des critères correspondant aux pires scenarii et c'est pour cela que traditionnellement dans le domaine aéronautique une pièce est remplacée à la moitié de sa durée de vie théorique, quel que soit son état de fatigue réel. La rentabilité finale effective des pièces (rapport du temps d'utilisation effectif de la pièce sur sa capacité théorique) est ainsi de l'ordre de 50%, ce qu'il serait souhaitable d'améliorer.

Par ailleurs, du fait des révisions fréquentes (imposant de démonter la suspension d'un avion puis de la remonter sur un avion *a priori* différent) et des durées de vie différentes des diverses pièces d'un avion, le suivi de la vie d'une suspension est complexe. En particulier, il peut arriver que le numéro de série gravé sur une suspension métallique s'efface avec le temps ; dans ce cas, ne pouvant se référer à son historique et afin de ne prendre aucun risque, l'estimation de sa durée d'utilisation doit être faite avec les hypothèses les plus pessimistes, par exemple en considérant que cette suspension a été mise en place sur le premier avion équipé de ce type de suspension et a volé continûment depuis lors ; en pratique, l'utilisation de la pièce a été inférieure à cette hypothèse fictive pessimiste, si bien que la suspension sera remplacée trop tôt.

En outre, s'il existe aujourd'hui des indicateurs indirects de la fatigue des suspensions, ils ne peuvent qu'être approximatifs et fournir des informations incertaines. Ainsi, pour estimer l'état de fatigue d'une suspension, on utilise parfois les données mesurées par la centrale inertielle de l'avion qui détermine si l'avion a été soumis à des contraintes exceptionnelles comme un atterrissage brutal (traditionnellement désigné par l'expression "hard landing" en anglais) ; à cet effet, on procède à un calcul de transferts de charge depuis la centrale inertielle jusqu'à la pièce. Néanmoins, si un atterrissage brutal peut effectivement imposer des charges exceptionnelles sur une suspension, ce n'est pas le cas de manière systématique et l'on peut être amené à réviser une suspension alors même que l'atterrissage n'a pas réellement contraint la suspension, par exemple parce que les efforts ont été absorbés et n'ont pas été transmis jusqu'à la suspension.

L'art antérieur n'a pas réellement traité la question de la mesure de la fatigue pour anticiper les révisions ; il s'est plutôt attaché à la détection de la rupture de pièces, comme par exemple dans la demande de brevet FR 2,923,540 au nom de la Demanderesse. D'autres exemples de l'état de la technique sont US2002/0154029 ou US2007/0107530. L'invention vise à pallier ces inconvénients et à faciliter la mesure de la fatigue de pièces mécaniques d'aéronefs pour améliorer la pertinence de leurs révisions et permettre d'optimiser leur utilisation.

L'invention s'applique particulièrement bien aux suspensions de turboréacteurs aux avions, les pièces formant ces suspensions étant sujettes à un nombre important de contraintes. Néanmoins, la Demanderesse n'entend pas restreindre la portée de ses droits à cette seule application, l'invention s'appliquant et procurant des avantages de manière plus générale à toute pièce d'un aéronef soumise à des contraintes.

C'est ainsi que l'invention concerne un système de mesure de fatigue d'une pièce d'un aéronef tel que défini dans la revendication 1. Les données enregistrées par le système sont de préférence le nombre d'occurrences de dépassement de chacun des seuils.

On peut ainsi avoir une bonne estimation de la fatigue réelle de la pièce liée aux contraintes auxquelles elle a été soumise. En quelque sorte, les capteurs peuvent "compter" le nombre d'occurrences de contraintes dépassant différents seuils, ces occurrences étant enregistrées par le système ce qui permet d'en déduire l'endommagement (c'est-à-dire la fatigue) résultant sur la pièce. L'ensemble des contraintes est décomposé de manière incrémentale, chaque seuil d'un capteur formant un incrément.

Il est ainsi possible d'optimiser l'utilisation de la pièce. En particulier, à partir de la connaissance de sa fatigue, il est possible de décider de l'opportunité de la révision d'une pièce, ce choix étant fait sur la base de la fatigue réellement subie par la pièce et non pas en réponse à des statistiques générales appliquées à toutes les pièces indépendamment des contraintes effectivement perçues (qu'il s'agisse de contraintes d'utilisation normale ou de contraintes accidentelles ou exceptionnelles).

Les données enregistrées par le système permettent également de ne procéder au remplacement d'une pièce que si son endommagement réel le justifie, contrairement à l'art antérieur où les pièces étaient mise au rebus après une durée de temps prédéterminée et indépendamment de leur état de fatigue réel.

Il est par ailleurs possible d'instrumenter les aéronefs d'essais avec le système de l'invention pour améliorer le dimensionnement des pièces à partir des données enregistrées par le système. Il est aussi possible, grâce à l'invention, de confirmer les valeurs fournies par les avionneurs pour la certification des pièces ; en particulier, si l'on détermine un spectre de fatigue complexe grâce au procédé de l'invention, ce spectre peut être comparé aux spectres fournis par les avionneurs.

Notons qu'en cas d'effacement du numéro de série d'une pièce, on peut estimer sa durée d'utilisation effective par une estimation de sa fatigue. Par ailleurs, et en particulier, le nombre de contraintes non exceptionnelles auxquelles la pièce a été soumise donne une bonne approximation de sa durée d'utilisation.

Les incréments d'un seuil de contrainte à l'autre (c'est-à-dire les intervalles séparant les seuils successifs) peuvent être constants ou évolutifs. Cela peut permettre de concentrer le nombre de capteurs sur des gammes de contraintes particulières.

Selon une forme de réalisation particulière, le système comporte une unité de traitement comportant les moyens d'enregistrement des données et les capteurs comportent des moyens de transmission des données à l'unité de traitement.

L'unité de traitement peut comporter des moyens d'analyse des données permettant de calculer à partir des données une estimation de la fatigue de la pièce due aux contraintes mécaniques.

Selon une autre forme de réalisation, chaque capteur comporte des moyens d'enregistrement de données.

De préférence, le système (en particulier, l'unité de traitement ou les capteurs selon la forme de réalisation choisie) comporte des moyens de transmission des données - de préférence sur requête - à des moyens déportés d'analyse de ces données agencés pour calculer une estimation de la fatigue de la pièce. Ces moyens déportés peuvent par exemple comporter un appareil portable tenu par un opérateur ; il suffit ainsi à ce dernier de recevoir les données du système sur son appareil pour connaître l'état de fatigue de la pièce.

Selon une forme de réalisation préférée, les capteurs sont des capteurs de déformations mécaniques.

Selon une forme de réalisation préférée, les capteurs sont des capteurs de type MEMS.

L'acronyme MEMS signifie, en anglais, "microelectromechanical system", ce qui se traduit littéralement en français par "microsystème électromécanique". Ces microsystèmes sont conventionnellement désignés par l'homme du métier sous cet acronyme MEMS, qui sera donc utilisé dans la suite de la description. Il s'agit de systèmes intégrant, sur une puce, à l'échelle miniature (de l'ordre du millimètre ou du micromètre), non seulement des organes de calculs électroniques, mais également des organes mécaniques, fournissant des données aux organes de calcul ou commandés par eux. Ces organes mécaniques et électroniques servent à remplir certaines fonctions, ici au moins une fonction de capture de données de contraintes mécaniques et une fonction d'enregistrement de données et/ou de transmission de données. Les systèmes de type MEMS comprennent donc des organes de micro électronique et de micro mécanique. Ils sont généralement fabriqués grâce à des circuits intégrés pour les organes électroniques et grâce à du micro usinage pour les organes mécaniques.

Les systèmes de type MEMS étant miniaturisés, leur encombrement est faible, ce qui est avantageux pour une pièce d'un aéronef. Une autre conséquence de ce faible encombrement est qu'il est facilement possible de prévoir une pluralité de capteurs sur une même pièce et ainsi d'améliorer la précision de la mesure, un état de fatigue étant décomposé en un plus grand nombre de seuils de contraintes.

Selon une forme de réalisation particulière, au moins deux capteurs sont agencés pour détecter un même seuil de contrainte. Ainsi, en cas de défaillance d'un capteur, l'autre capteur peut encore détecter le seuil de contrainte en question.

L'invention s'applique particulièrement bien à des pièces métalliques, dont la fatigue est particulièrement sensible aux contraintes mécaniques qui leur sont appliquées.

L'invention concerne encore un procédé de mesure de fatigue d'une pièce d'un aéronef tel que défini dans la revendication 6. Un tel procédé de maintenance procure tous les avantages du système décrit ci-dessus.

Selon une forme de réalisation préférée :

- on calcule pour chaque seuil, à partir du nombre total d'occurrences, le nombre d'occurrences de mesures de dépassement dudit seuil et inférieures au seuil supérieur et
- on calcule pour chaque seuil la fatigue équivalente de la pièce correspondant à l'application d'un nombre de contraintes comprises entre ces seuils correspondant audit nombre d'occurrences calculées et
- on somme les fatigues équivalentes calculées pour obtenir la fatigue totale de la pièce.

Selon une forme de réalisation préférée, on met en oeuvre le procédé à l'aide du système présenté ci-dessus.

L'invention concerne encore un procédé de maintenance d'un aéronef comportant au moins une pièce soumise à des contraintes mécaniques et un système de mesure de fatigue conforme au système présenté ci-dessus, dans lequel :

- on transmet au système une requête de transmission des données enregistrées par le système,
- on reçoit les données et
- on calcule à partir de ces données une estimation de la fatigue de la pièce due aux contraintes mécaniques.

Un tel procédé de maintenance procure tous les avantages du système décrit ci-dessus. En particulier, il permet de prendre une décision quant à l'opportunité d'une révision sans démonter la pièce, puisqu'il suffit de recevoir les données enregistrées par le système pour connaître la fatigue de la pièce.

Selon une forme de réalisation préférée, l'émission de la requête et la réception des données sont faites sans fil au moyen d'un appareil portable d'émission/réception.

L'utilisation d'un tel appareil portable est particulièrement simple et permet à un utilisateur de se tenir à côté de l'aéronef et de simplement envoyer des requêtes et recevoir des données pour piloter notamment les révisions de la pièce.

En particulier, on peut prévoir qu'un même appareil portable puisse être utilisé pour la réception de données en provenance de plusieurs systèmes de mesure de fatigue montés sur des pièces distinctes. Il est ainsi possible de piloter les révisions de ces pièces dans leur ensemble.

Selon une forme de réalisation préférée dans ce cas, l'appareil portable comporte des moyens de traitement permettant le calcul d'une estimation de la fatigue de la pièce.

L'invention sera mieux comprise à l'aide de la description suivante de la forme de réalisation préférée du système et du procédé de l'invention, en référence aux planches de dessins annexées, sur lesquelles:

- la figure 1 représente une vue schématique en perspective, vue de l'aval, d'un turboréacteur suspendu à la structure d'un aéronef par un premier type de suspension ;
- la figure 2 représente une vue schématique en perspective, vue de l'amont, d'un second type de suspension utilisable sur un turboréacteur ;
- la figure 3 est une représentation schématique du système de l'invention avec une représentation de la loi régissant la réponse des capteurs aux contraintes mécaniques et
- la figure 4 est un histogramme représentatif des données enregistrées par les capteurs du système de l'invention pendant une période de temps déterminée.

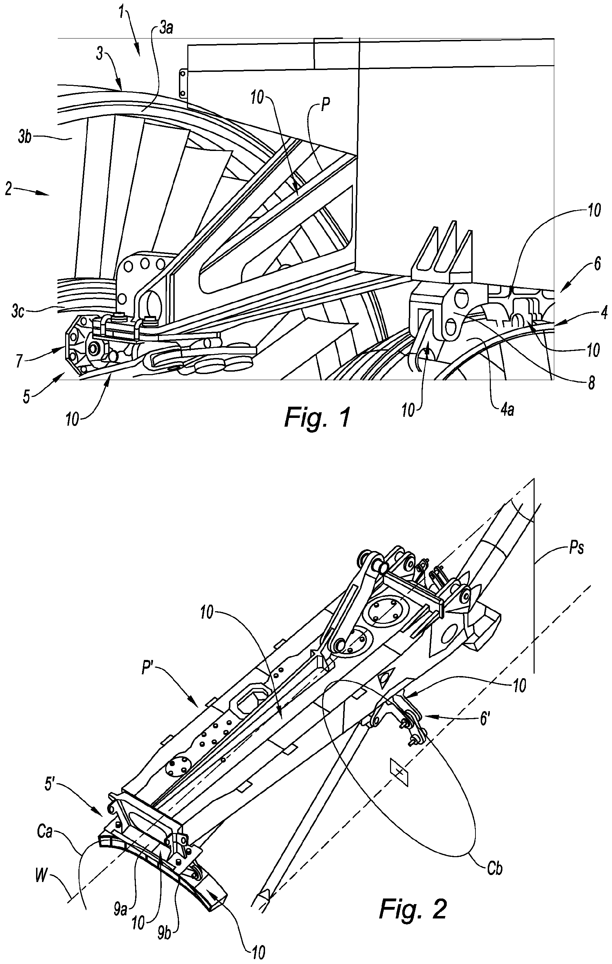

En référence à la figure 1, et de manière bien connue de l'homme du métier, un turboréacteur 1 comporte une soufflante 2, par laquelle l'air extérieur est aspiré dans le turboréacteur, un compresseur basse pression en amont d'un compresseur haute pression, agencés pour comprimer l'air et en sortie desquels l'air comprimé est guidé vers une chambre de combustion où il est brûlé avec du carburant également comprimé; les gaz brûlés sont guidés vers une turbine haute pression puis une turbine basse pression en sortie de laquelle ils s'échappent du turboréacteur par une tuyère d'échappement.

Les différentes parties du turboréacteur sont contenues dans des carters. Le turboréacteur 1 représenté sur la figure 1 comporte en particulier, en amont, un carter de soufflante et un carter 3 dit intermédiaire et, en aval, un carter d'échappement 4. Le carter intermédiaire 3 et le carter d'échappement 4 sont des carters structuraux de la structure du turboréacteur 1.

Le carter intermédiaire 3 comporte une virole extérieure 3a reliée par des bras radiaux 3b à un moyeu 3c supportant par l'intermédiaire de paliers de roulement amont les arbres des rotors des corps basse pression et haute pression du turboréacteur 1. De même, le carter d'échappement 4 comporte une virole externe 4a supportant un moyeu sur lequel sont montés les paliers de roulement aval des arbres des rotors des corps basse pression et haute pression.

Le moteur 1 est suspendu à la structure de l'aéronef qu'il propulse, et qui n'est pas représenté, par une suspension avant 5 et par une suspension arrière 6 toutes deux fixées à un pylône P ou mât moteur P lui-même solidaire de la structure de l'aéronef.

La suspension avant 5 est du type comportant un groin 7 reçu dans un logement de fixation adapté du carter intermédiaire 3. La suspension arrière 6 comporte une poutre 8 fixée directement au carter d'échappement 4. De telles suspensions sont bien connues de l'homme du métier et il n'est pas nécessaire, dans le cadre de cette description, de les décrire plus en détails.

Sur certaines des pièces du dispositif de suspension du turboréacteur à l'aéronef, on a agencé un système 10 de mesure de fatigue. Plus précisément, un système est agencé sur chacune des pièces dont on souhaite pouvoir mesurer la fatigue due aux contraintes auxquelles la pièce est soumise. Chaque système de mesure comporte n capteurs Ci (i = 1 à n) disposés sur la pièce.

Dans l'exemple de la figure 1, on a prévu un système de mesure 10 sur le groin 7 de la suspension avant 5, sur la poutre 8 de la suspension arrière 6, sur chaque bielle reliant la poutre 8 de la suspension arrière 6 au carter intermédiaire 4a et sur le pylône P.

On a représenté sur la figure 2 certains éléments participant à la suspension d'un turboréacteur conformément à un deuxième type de suspension et sur lequel on peut prévoir un système 10 de mesure de fatigue conforme à l'invention. On n'a représenté sur la figure 2 qu'une poutre P' et des suspensions avant 5' et arrière 6' d'un tel turboréacteur, ces éléments ayant été représentés seuls mais dans leur contexte, seuls deux cercles Ca, Cb ayant été tracés pour représenter schématiquement les carters du turboréacteur sur lesquels sont montées les suspensions 5', 6'. La suspension avant 5' comporte une poutre rectiligne 9a reliée par des biellettes à une poutre intermédiaire 9b communément dénommée "yoke" par l'homme du métier et elle-même reliée au carter intermédiaire du turboréacteur par des biellettes ; les suspensions de ce type sont bien connues dans le domaine. La suspension arrière 6' comporte quant à elle une poutre unique.

De même que précédemment, on souhaite pouvoir estimer la fatigue de certaines pièces du dispositif de suspension du turboréacteur à l'aéronef. On prévoit à cet effet un système 10 de mesure de fatigue conforme à l'invention sur chacune des pièces dont on souhaite suivre la fatigue, par exemple sur le pylône P', sur la poutre 9a de la suspension avant 5', sur la poutre intermédiaire (yoke) 9b de la suspension avant 5' et sur la poutre de la suspension arrière 6'. Il est par ailleurs possible de prévoir des systèmes de mesure 10 pour certaines biellettes du dispositif de suspension.

Sur la figure 1 comme sur la figure 2, seuls les systèmes 10 ont été référencés, les capteurs Ci n'ayant pas été représentés car leurs dimensions sont très faibles.

Finalement, on comprend que le système 10 de mesure de fatigue de l'invention peut être mis en place sur de nombreuses pièces du turboréacteur ou de l'aéronef, du fait de sa simplicité.

Selon une forme de réalisation particulière, on monte plusieurs systèmes de mesure 10 distincts pour un même moteur, chaque système de mesure 10 étant spécifiquement dédié à la mesure de la fatigue due aux contraintes exercées selon un degré de liberté du moteur. Un moteur comporte six degrés de liberté, typiquement en translation selon trois directions perpendiculaires et en rotation autour de ces directions ; ces six degrés de liberté sont modélisables par six bielles travaillant en traction-compression ; les capteurs d'un système de mesure 10 mesurant les efforts de traction-compression, chaque système 10 peut suivre la fatigue due aux contraintes sur une bielle. On peut ainsi prévoir plusieurs systèmes 10 pour le moteur, chaque système 10 mesurant la fatigue d'une bielle ; selon une forme de réalisation particulière, on prévoit un système 10 par bielle, l'ensemble des degrés de liberté pouvant ainsi être suivis.

Les capteurs Ci d'un système de mesure 10 sont de préférence disposés dans une zone de la pièce où les différents emplacements des n capteurs Ci (i = 1 à n) sont soumis à un même type de déformations et de préférence à des contraintes de traction et/ou compression. Par exemple, si le système est agencé pour mesurer la fatigue d'une bielle, on placera de préférence les capteurs Ci au milieu de la bielle.

On note que si une pièce est symétrique par rapport à un plan et qu'un système de mesure de fatigue est agencé sur elle pour mesurer la fatigue due aux contraintes perpendiculaires à ce plan, des capteurs Ci peuvent être placés de part et d'autre du plan de symétrie, de préférence en alternant d'un côté à l'autre les seuils des capteurs Ci. Ainsi, par exemple, le pylône P' représenté sur la figure 2 s'étendant globalement selon un axe W et étant globalement symétrique par rapport à un plan de symétrie Ps contenant cet axe W, des capteurs Ci peuvent être répartis de part et d'autre du plan Ps, en alternant les seuils successifs de part et d'autre de ce plan Ps.

On peut envisager de fixer les capteurs Ci sur les pièces dont on souhaite mesurer la fatigue de plusieurs manières, par exemple par collage, vissage ou en les noyant directement dans le matériau. On peut aussi visser sur une pièce une petite plaque sur laquelle sont fixés les capteurs Ci.

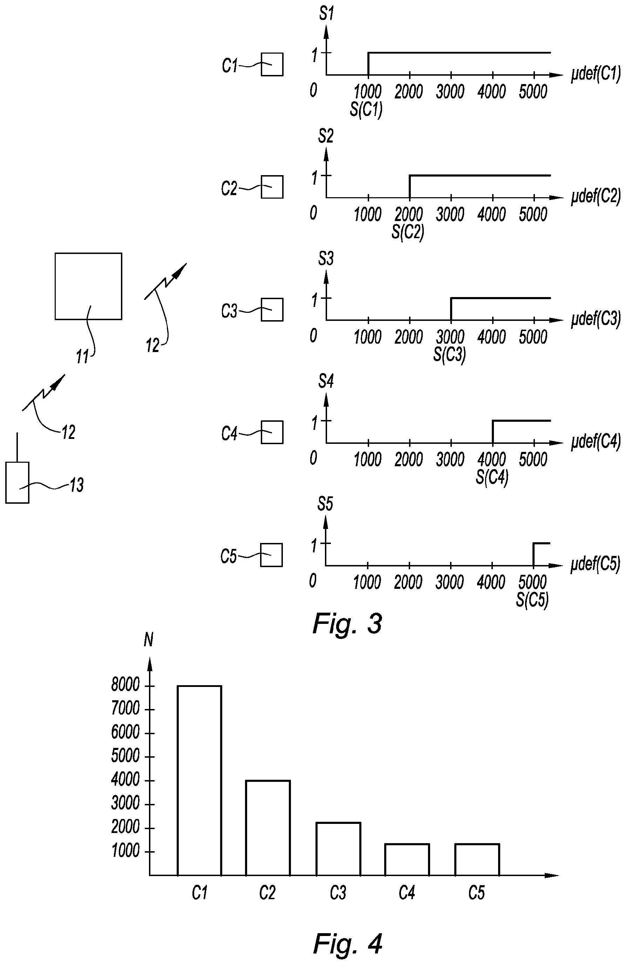

Le système 10 de mesure de fatigue de l'invention va maintenant être décrit plus en détails, en tant que tel et en référence à une pièce quelconque, en référence aux figures 3 et 4.

Le système 10 comporte une pluralité n de capteurs de contraintes Ci, en l'espèce pour l'exemple des figures 3 et 4, cinq capteurs C1, C2, C3, C4, C5 (n = 5). Les capteurs C1-C5 sont montés sur la pièce dont on souhaite mesurer la fatigue résultant des contraintes mécaniques qu'elle subit.

Afin de faciliter la description du système 10 de l'invention, les valeurs assignées aux capteurs sont fictives et destinées uniquement à comprendre le fonctionnement du système. L'homme du métier adaptera le système (en particulier le nombre de capteurs, la valeur des seuils de contraintes qu'ils détectent et le nombre de seuils détectés) à la pièce sur laquelle il montera le système 10, en particulier en fonction des matériaux utilisés.

Les capteurs Ci sont en l'espèce des capteurs de déformation, la déformation d'une pièce en réponse à une contrainte étant exprimée en une grandeur sans unité dénommée "micro-déformation", symbolisée par "$\mu$def" et bien connue de l'homme du métier ; cette grandeur correspond à un allongement rapportée à une unité de longueur selon la formule bien connue : $\mu$def = $\Delta$L/L. Par exemple, un allongement d'1mm pour une pièce d'1m de long correspondant à une déformation de 0,001/1 = 1.000$\mu$def.

Ainsi, les contraintes subies par un matériau se traduisent en déformations de la pièce et donc en $\mu$def (en application de la loi de Hooke). Les capteurs de déformations sont donc des capteurs de contraintes. On comprendra donc aisément qu'on utilisera, dans la suite de la description, indistinctement la notion de contrainte ou de déformation, de seuil de contrainte ou de seuil de déformation, puisque de la déformation se déduit directement la contrainte appliquée.

On reproduit ci-dessous à titre d'exemple une correspondance approximative entre les seuils de déformation des capteurs de la figure 3 (introduits plus en détails plus bas) et les contraintes associées pour l'acier (ou l'inconel ou "INCO") et le titane ; on voit bien que la contrainte associée à une déformation donnée (et vice-versa) n'est pas la même pour ces deux types de matériaux.

| Acier ou INCO | | Titane | |
|---|---|---|---|
| Déformation ($\mu$def) | Contrainte associée (MPa) | Déformation ($\mu$def) | Contrainte associée (MPa) |
| 1000 | 210 | 1000 | 110 |
| 2000 | 420 | 2000 | 220 |
| 3000 | 630 | 3000 | 330 |
| 4000 | 840 | 4000 | 440 |
| 5000 | 1050 | 5000 | 550 |

Chaque capteur C1-C5 est agencé pour détecter un niveau ou seuil de contrainte mécanique prédéterminé et pour délivrer un signal de données (en l'espèce un bit) en cas de dépassement de ce seuil. Autrement dit, les capteurs C1-C5 sont chacun des capteurs d'une contrainte seuil déterminée et chaque capteur permet de compter le nombre d'occurrences de contraintes supérieures à cette contrainte seuil.

On a représenté sur la figure 3, en regard de chacun des capteurs C1-C5 du système 10, un diagramme représentatif du signal Si (i = 1 à 5) délivré par le capteur Ci en fonction de la contrainte c'est-à-dire la déformation $\mu$def(Ci) (i = 1 à 5) qu'il subit. Comme expliqué ci-dessus, chaque capteur Ci (i = 1 à 5) délivre un signal Si en fonction de la déformation qu'il subit :

- Si = 0 (ce qui correspond en fait en l'occurrence à une absence de signal) si la déformation $\mu$def(Ci) est inférieure au seuil de déclenchement du capteur Ci et
- Si = 1 (ce qui correspond à un bit) si la déformation $\mu$def(Ci) est supérieure au seuil de déclenchement du capteur Ci.

En l'espèce, comme on le voit sur la figure 3 :

- le premier capteur C1 a un seuil de déclenchement égal à S(C1) = 1.000$\mu$def ;
- le second capteur C2 a un seuil de déclenchement égal à S(C2) = 2.000$\mu$def ;
- le troisième capteur C3 a un seuil de déclenchement égal à S(C3) = 3.000$\mu$def ;
- le quatrième capteur C4 a un seuil de déclenchement égal à S(C4) = 4.000$\mu$def ;
- le cinquième capteur C5 a un seuil de déclenchement égal à S(C5) = 5.000$\mu$def ;

Lorsque la pièce sur laquelle les capteurs Ci sont montés subit une déformation, chaque capteur Ci subit sensiblement cette même déformation. Si la déformation qu'il subit est inférieure à son seuil de déclenchement, le capteur n'émet pas de signal ; si la déformation est supérieure à son seuil de déclenchement, le capteur émet un signal (bit). Par ailleurs, dans la forme de réalisation décrite, en cas de charge prolongée, un capteur Ci n'émet qu'un seul bit ; un capteur Ci n'émet un nouveau bit que si le niveau de contrainte repasse en-dessous de son seuil S(Ci) avant de repasser au-dessus.

A titre d'exemple, supposons que la pièce subisse une déformation égale à 3.300$\mu$def ; dans ce cas, les capteurs C1, C2 et C3 émettent un bit et les capteurs C4 et C5 n'en émettent pas.

Les données des capteurs C1-C5 (c'est-à-dire le nombre de bits qu'ils ont chacun émis) au cours de l'utilisation de l'aéronef qui en est pourvu sont enregistrées et stockées dans une mémoire d'une unité de traitement 11 du système de mesure 10, cette unité de traitement 11 pouvant par exemple être montée à proximité de la zone où sont implantés les capteurs C1-C5 et communiquant avec eux par ondes radio 12, comme schématisé sur la figure 3. Plus précisément, lorsqu'il émet un bit, un capteur Ci transfère un signal de données par ondes radio 12 à l'unité de traitement 11, ce signal comportant une identification du capteur Ci ; l'unité de traitement 11 peut alors incrémenter le compteur du capteur Ci considéré. L'enregistrement électronique de données de capteurs est connu et il n'est pas nécessaire ici de le décrire en détails ; il peut être mis en oeuvre de manière classique. L'unité de traitement 11 peut être contenue dans le calculateur du turboréacteur, bien connu sous son acronyme anglais FADEC qui signifie "Full Authority Digital Engine Control". On a décrit ici une communication des données entre les capteurs Ci et l'unité de traitement 11 par ondes radios (hautes fréquences ou basses fréquences), mais il va de soi que tout autre moyen de communication, avec fil ou sans fil, quel qu'en soit le protocole, est envisageable.

Alternativement, les données des capteurs Ci peuvent être enregistrées directement dans des moyens agencés directement dans les capteurs.

Quel que soit le mode d'enregistrement des données, après une période de temps d'utilisation, le système comporte des données relatives aux nombre de déformations subies par chaque capteur C1-C5 et supérieures à leurs seuils respectifs.

On a représenté sur la figure 4 un histogramme représentatif des données enregistrées par les capteurs du système 10 pendant une période de temps déterminée (par exemple depuis la mise en service de la pièce équipée des capteurs C1-C5). Cet histogramme représente, en abscisse, les capteurs C1-C5 considérés et, en ordonnées, le nombre N de signaux égaux à 1 que chaque capteur a émis pendant la période de temps déterminée.

On voit ainsi que le premier capteur C1 a émis 8.000 bits (signifiant qu'il a subi 8.000 déformations supérieures à son seuil de déclenchement 1.000$\mu$def), le deuxième capteur C2 a émis 4.000 bits (signifiant qu'il a subi 4.000 déformations supérieures à son seuil de déclenchement 2.000$\mu$def), le troisième capteur C3 a émis 2.000 bits, le quatrième capteur C4 a émis 1.000 bits et le cinquième capteur C5 a émis 1.000 bits.

A partir des données enregistrées par les capteurs C1-C5, on peut calculer l'endommagement (ou dommage) total $D_{TOTAL}$ qu'a subi la pièce et donc sa fatigue (la fatigue correspondant à l'endommagement).

D'une manière générale (et connue), l'endommagement ou dommage D subi par une pièce soumise à une contrainte déterminée A (ou déformation A) se définit par la formule suivante (équation de Miner) :

$$D = n(A)/N(A)$$

où

n(A) représente le nombre d'occurrences (cycles) de l'événement conduisant à l'application de la contrainte (déformation) A et

N(A) représente le nombre d'occurrences (cycles) de l'événement conduisant à l'application de la contrainte (déformation) A que peut supporter la pièce avant sa rupture (cette valeur est traditionnellement déterminée grâce aux courbes dites de Wöhler).

Ainsi, lorsque le dommage D est égal à 1, la pièce casse ; lorsque le dommage est égal à 0, la pièce n'a pas du tout été endommagée.

Le nombre de signaux émis par chaque capteur Ci est représentatif de la fatigue qu'il a subie, puisqu'il est fonction du nombre d'occurrences des différentes déformations auxquelles a été soumise la pièce. On peut déduire des données enregistrées par les capteurs Ci un dommage équivalent Di par capteur Ci ; ce dommage équivalent Di correspond au dommage résultant de l'application de contraintes supérieures au seuil S(Ci) du capteur Ci mais inférieures au seuil supérieur S(Ci+1).

Les lois de fatigue enseignent que le dommage total $D_{TOTAL}$ d'une pièce résultant de l'ensemble des contraintes qui lui sont appliquées peut être décomposé de manière linéaire en la somme des dommages équivalents de chaque gamme de contraintes. Autrement dit, si l'on découpe l'ensemble des contraintes en gammes de contraintes correspondant aux intervalles entre les seuils successifs des capteurs Ci, une bonne approximation du dommage $D_{TOTAL}$ de la pièce est obtenue par la somme des dommages équivalents Di pour chaque gamme de contraintes, c'est-à-dire

$$D_{TOTAL} = \sum_{1}^{n} D_i \ .$$

Afin de calculer $D_{TOTAL}$, on calcule pour chaque capteur Ci, à partir des données enregistrées par les capteurs Ci (i = 1 à 5), le nombre n(Ci) d'occurrences de contraintes comprises entre le seuil S(Ci) de ce capteur Ci et le seuil supérieur S(Ci+1). Le dommage équivalent Di d'un capteur Ci peut alors être calculé sur la base de ce nombre n(Ci), en l'appliquant à une ou des contraintes représentatives de la gamme de contraintes considérée. Ne connaissant pas la répartition exacte des contraintes dans la gamme de contraintes, on peut ici procéder à une approximation ; plusieurs solutions sont envisageables :

- on peut utiliser une valeur moyenne de déformation entre les deux seuils ($\mu$def(moyenne) = (S(Ci)+S(Ci+1))/2) et considérer que le dommage Di résultant est celui résultant de n(Ci) occurrences de cette déformation moyenne $\mu$def(moyenne) ;
- on peut procéder à des analyses statistiques pour déterminer une moyenne pondérée à appliquer entre les seuils et utiliser cette moyenne pondérée ;
- on peut, par sécurité, prendre la borne supérieure (S(Ci+1)) de la gamme de contraintes et considérer que le dommage équivalent Di correspond à n(Ci) occurrences d'une déformation correspondant à cette borne supérieure S(Ci+1) (hypothèse dit "conservatrice").

D'autres approximations sont possibles. Dans la forme de réalisation préférée de l'invention, afin de satisfaire aux critères les plus exigeants en matière de sécurité en aéronautique, on choisit la dernière approximation (hypothèse conservatrice). La déformation calculée Di est ainsi supérieure à la déformation réelle.

Afin de déterminer le nombre n(Ci) d'occurrences comptées par un capteur Ci, il convient de retrancher de la somme totale N(Ci) des bits du capteur Ci tous les signaux qui correspondent à des contraintes supérieures au seuil supérieur S(Ci+1) au seuil S(Ci) de ce capteur Ci.

Pour déterminer l'ensemble des occurrences n(Ci), on commence donc par le capteur C5 dont le seuil est le plus élevé.

Ainsi, par exemple sur la figure 4:

- n(C5) = N(C5) = 1.000 donc le capteur C5 a compté 1.000 contraintes supérieures à son seuil S(C5) = 5.000$\mu$def ;
- n(C4) = N(C4) - N(C5) = 0 donc le capteur C4 n'a compté aucune contrainte comprise entre son seuil S(C4) = 4.000$\mu$def et le seuil supérieur S(C5) (en effet, tous les bits du compteur C4 correspondent à des contraintes supérieures à S(C5) donc déjà comptées par le capteur C5) ;
- n(C3) = N(C3) - N(C4) = 2.000 - 1.000 = 1.000 donc le capteur C3 a compté 1.000 contraintes comprises entre son seuil S(C3) = 3.000$\mu$def et le seuil supérieur S(C4);
- n(C2) = N(C2) - N(C3) = 4.000 - 2.000 = 2.000 donc le capteur C2 a compté 2.000 contraintes comprises entre son seuil S(C2) = 2.000$\mu$def et le seuil supérieur S(C3);
- n(C1) = N(C1) - N(C2) = 8.000 - 4.000 = 4.000 donc le capteur C1 a compté 4.000 contraintes comprises entre son seuil S(C1) = 1.000$\mu$def et le seuil supérieur S(C2).

Pour chacun des n(Ci) ainsi calculés ci-dessus, on déduit un dommage équivalent Di pour la pièce (Di = n(Ci)/N(S(Ci+1))) où N(S(Ci+1)) est le nombre d'occurrences d'une contrainte correspondant à la déformation du seuil supérieur S(Ci+1) conduisant à la rupture de la pièce (voir approximation plus haut).

Finalement, le dommage total D$_{TOTAL}$ ressenti par la pièce est, comme explicité plus haut, égal à la somme des dommages correspondant à chaque gamme de contrainte, c'est-à-dire $D_{TOTAL} = \sum_1^n D_i$ pour n capteurs.

Le système a été présenté, à titre d'exemple, avec 5 capteurs. Il va de soi qu'il peut comporter plus ou moins de capteurs et plus généralement un nombre n de capteurs. Les diverses formules ci-dessus sont alors mises en oeuvre pour i = 1 à n.

On présente de nouveau et de manière plus synthétique la mise en oeuvre de la forme de réalisation préférée du procédé de l'invention pour n capteurs. Le procédé comporte en l'espèce les étapes suivantes :

1) les n capteurs Ci mesurent le nombre d'occurrences N(Ci) de contraintes supérieures à leur seuil S(Ci) ;

2) on enregistre ces données N(Ci) pendant une durée t ;

3) on calcule pour chaque capteur Ci, à partir de l'ensemble des occurrences N(Ci) (i = 1 à n), le nombre d'occurrence n(Ci) correspondant à des contraintes comprises entre le seuil S(Ci) du capteur Ci et le seuil supérieur S(Ci+1), selon la formule :

- n(Cn) = N(Cn) ;
- pour i < n, n(Ci) = N(Ci) - N(Ci+1) ;

4) On calcule pour chaque capteur Ci un dommage équivalent Di pour la pièce correspondant à la gamme de contraintes comprise entre le seuil S(Ci) du capteur Ci et le seuil supérieur S(Ci+1) ;

5) On calcule le dommage total D$_{TOTAL}$ de la pièce selon la formule : $D_{TOTAL} = \sum_1^n D_i$ .

Autrement dit, grâce au système et au procédé de l'invention, on peut obtenir, pour la pièce équipée des capteurs incrémentaux Ci (i = 1 à n), chaque capteur étant réglé sur un seuil de contraintes S(Ci) (et les contraintes ayant ainsi été décomposées en n gammes de contraintes successives), un spectre de fatigue complexe qui permet d'obtenir la fatigue totale (dommage total $D_{TOTAL}$) à partir de sa décomposition en fatigues équivalentes (dommages équivalents Di) correspondant à chaque gamme de contraintes.

Il est ainsi possible de mettre en oeuvre des procédés de maintenance simplifiés.

Par exemple, un opérateur peut avoir en sa possession un appareil 13 de réception des données enregistrées par les capteurs Ci. Dans l'exemple du système de la figure 3, l'appareil 13 est agencé pour communiquer par ondes radios 12 avec l'unité de traitement 11 du système; toute autre forme de communication peut bien entendu être prévue.

Bien sûr, si le système 10 ne comporte pas d'unité de traitement pour le stockage des données mesurées par les capteurs Ci, l'appareil 13 peut être agencé pour communiquer directement avec les capteurs Ci pour que ces derniers lui transmettent individuellement les données qu'ils ont enregistrées.

L'appareil 13 comporte une unité de traitement avec un logiciel (algorithme) de calcul lui permettant, à partir des données enregistrées (les bits N(Ci) (i = 1 à n) des capteurs Ci), de calculer le dommage correspondant $D_{TOTAL}$ de la pièce, conformément au procédé décrit ci-dessus.

Ainsi, l'opérateur approche son appareil 13 de la pièce (par exemple une suspension de l'avion), ce dernier télécharge automatiquement ou sur instructions les données enregistrées par les capteurs Ci et calcule le dommage $D_{TOTAL}$, c'est-à-dire la fatigue, de la suspension, ce qui permet à l'opérateur de prendre une décision en conséquence. Par exemple :

- si le dommage $D_{TOTAL}$ est compris entre 0 et 0.3, une révision n'est pas nécessaire ;
- si le dommage $D_{TOTAL}$ est compris entre 0.3 et 0.8, une révision est nécessaire ;
- si le dommage $D_{TOTAL}$ est supérieur à 0.8, la pièce doit être remplacée.

On peut d'ailleurs envisager que l'analyse ne soit pas faite par l'opérateur lui-même mais automatiquement par l'appareil 13. Ainsi, si aucune révision n'est nécessaire, l'appareil 13 n'émet pas de signal (ou émet par exemple une lumière de couleur verte) et, si une révision est nécessaire, l'appareil 13 émet un signal sonore (ou émet par exemple une lumière de couleur rouge).

On peut aussi envisager que l'information recueillie par l'appareil 13 soit transmise, automatiquement ou sur requête de l'opérateur, à un serveur informatique ou tout autre dispositif agencé pour recevoir cette information et la traiter.

Toute autre exploitation est envisageable en fonction des souhaits des utilisateurs. On peut en particulier envisager que le suivi de la fatigue de la pièce soit fait de manière automatique par l'unité de traitement 11 (par exemple le FADEC) qui alerte automatiquement un tiers (comme le pilote de l'avion, son fabricant, son exploitant, un serveur informatique ou autre) dès lors qu'un certain niveau de fatigue est dépassé.

Finalement, le système 10 de l'invention permet de compter les contraintes auxquelles est soumise une pièce et, partant, de construire un spectre de fatigue complexe. Le système 10 permet aussi d'avoir une capture fidèle de l'historique des événements au cours de l'utilisation de la pièce. Les capteurs avec des seuils de faible amplitude donnent plus particulièrement des informations sur l'utilisation normale de la pièce c'est-à-dire sur sa durée effective d'utilisation depuis sa première utilisation. Les capteurs avec des seuils de grande amplitude donnent plus particulièrement des informations sur les contraintes exceptionnelles auxquelles a pu être soumise la pièce comme des atterrissages brutaux par exemple. Le système forme ainsi un excellent outil de maintenance pour l'utilisateur final d'une pièce.

Selon une forme de réalisation particulière, on peut envisager que les capteurs comportent une horloge leur imposant de délivrer un bit à intervalles réguliers, ce bit étant égal à 0 si le capteur n'est pas soumis à une contrainte dépassant son seuil et égal à 1 si le capteur est soumis à une contrainte dépassant son seuil. Ceci serait possible avec des capteurs digitaux.

Dans la forme de réalisation préférée, on préfère utiliser des capteurs mécaniques ne délivrant un signal qu'en cas d'excitation par une contrainte supérieure à leur seuil ; de tels capteurs mécaniques présentent l'avantage de la simplicité de leur utilisation mais aussi de leur alimentation en énergie.

On note que le système 10 a été présenté en relation avec des déformations positives ($\mu$def ne prenant que des valeurs positives). Conformément à une autre forme de réalisation, le système peut comporter des capteurs avec un seuil positif ($\mu$def > 0) et/ou des capteurs avec un seuil négatif ($\mu$def < 0), ce qui permet de compter les contraintes dans un sens (traction) et dans l'autre (compression) par exemple.

On note qu'il est possible de prévoir que plusieurs capteurs (au moins deux) présentent le même seuil de contrainte. Cela permet, en cas de défaillance de l'un de ces capteurs, que l'autre puisse encore compter les occurrences de contraintes correspondant à ce seuil. On note incidemment que, dans le cas où le ou l'ensemble des capteurs relatifs à un seuil seraient défaillants, la présence d'une pluralité de capteurs permet de minimiser l'erreur, puisque les contraintes des capteurs du seuil défaillant seront comptées par le capteur du seuil inférieur.

Bien entendu, plus le nombre de capteurs est important, plus la sécurité en cas de défaillance de certains est grande et plus le calcul de la fatigue totale est précis puisque les incréments entre seuils successifs sont plus faibles. Les incréments peuvent être tous identiques ou être évolutifs ; l'intérêt d'une évolution des incréments est de pouvoir avoir des mesures plus précises dans les gammes de contraintes les plus communes et des mesures moins précises pour les contraintes exceptionnelles (qui de toutes manières engendrent des contraintes très importantes). De préférence, on disposera entre 2 et 50 capteurs sur une pièce, selon la précision souhaitée pour la détermination de son endommagement.

Par exemple, la déformation minimale détectée peut être égale à 1.000$\mu$def (seuil du premier capteur C1) et la déformation maximale détectée égale à 5.000$\mu$def (seuil du dernier capteur Cn) avec un écart entre seuils successifs égal à 200$\mu$def (dans ce cas, on prévoit 21 capteurs dont les seuils sont respectivement égaux à 1.000, 1.200, 1.400, ..., 5.000).

On a présenté le système 10 de l'invention comme disposé sur une pièce mais il pourrait être disposé sur une structure comportant une pluralité de pièces et permettre le suivi de la fatigue de l'ensemble.

Dans une application aéronautique, les capteurs devraient de préférence supporter des températures dans une gamme entre -55°C et 600°C (en particulier pour des suspensions de turboréacteur) et pouvoir subir des projections d'huile et de fuel. Ils devraient par ailleurs de préférence pouvoir résister à la corrosion et à la salissure et en particulier celles liées aux projections d'eau, de sel, de sable et de boue. En outre, ils devraient avantageusement supporter les inspections non destructrices telles que le ressuage, l'application de courants de Foucault, de rayons X, etc. Ils devraient de préférence présenter une compatibilité électromagnétique à différentes ondes (radio, audio, etc.). Les capteurs devraient de plus pouvoir subir les vibrations mécaniques du turboréacteur pouvant être de l'ordre de plusieurs dizaines de kHz, en particulier celles dues à la rotation des pièces tournantes du turboréacteur (de 0 à 5.500 tours/minute pour le corps basse pression et de 0 à 20.000 tours/minute pour le corps haute pression) et tolérer des impacts de quelques dizaines à plusieurs dizaines de milliers de g (9,81 m.s$^{-2}$). Ils devraient de préférence au surplus tolérer des déflexions statiques et quasi-statiques sous divers types de chargements.

Les capteurs devraient par ailleurs de préférence avoir une durée de vie au moins égale à celle de la pièce sur laquelle ils sont destinés à être montés puisqu'ils sont destinés à en suivre l'état de fatigue tout au long de sa vie. Par exemple, leur durée de vie pourrait être supérieure à 60 ans ou à 70 ou 80.000 cycles de vol (décollage-vol-atterrissage).

De préférence, les capteurs peuvent subir plus de 10$^9$ occurrences de contraintes au-delà de leur seuil. Durant toute leur utilisation et l'application sur eux de charges dynamiques, les capteurs doivent de préférence ne pas présenter d'altérations dans leur fonctionnement.

De préférence, l'alimentation des capteurs est indépendante de celle de l'aéronef.

Le système de l'invention est particulièrement avantageux pour les dispositifs de suspension de turboréacteurs et en particulier les bielles de ces dispositifs, leurs poutres ou encore leurs pylônes. Le système de l'invention peut également avantageusement être agencé sur des trains d'atterrissage d'avions ou sur des barres de frein. D'une manière générale, il peut être agencé sur toute pièce instrumentable (c'est-à-dire sur laquelle on peut monter les capteurs) et dont l'utilisation entraîne des contraintes variées justifiant l'obtention d'un spectre de fatigue complexe ; c'est notamment le cas des diverses bielles et manilles d'un turboréacteur.

Les capteurs de l'invention permettent de suivre les divers types de fatigue sous contraintes par exemple classiquement désignés dans les courbes de Wohler par zone de fatigue oligocyclique (sous forte contrainte, où la rupture survient après un très petit nombre d'occurrences et est précédée d'une déformation plastique notable), zone de fatigue (ou endurance limitée, où la rupture est atteinte après un nombre de cycles qui croit quand la contrainte décroît) et zone d'endurance illimitée ; bien entendu, la zone d'endurance illimitée a moins d'intérêt puisque la pièce est normalement remplacée avant qu'une rupture puisse être atteinte en raison de contraintes correspondant à cette zone.

Selon la forme de réalisation préférée de l'invention, les capteurs Ci du système 10 sont montés dans des dispositifs (ou capteurs) de type MEMS déjà présentées en introduction.

On peut noter que les dispositifs de type MEMS, du fait de leur miniaturisation, comprennent des micro mécanismes dont le temps de réponse est très court, ce qui leur offre un temps de réaction très rapide.

De plus, de tels dispositifs peuvent être logés aisément dans les pièces du turboréacteur. Ils peuvent par ailleurs être autoalimentés et ainsi être autonomes, ce qui facilite leur mise en place et offre une garantie quant à la sécurité de l'ensemble. Les moyens d'autoalimentation d'un dispositif de type MEMS peuvent par exemple consister en des moyens agencés pour transformer l'énergie ambiante du turboréacteur en énergie électrique (par exemple une micro turbine utilisant les gaz environnants pour générer de l'électricité et alimenter le dispositif). De plus, des moyens de traitement des données mesurées par le capteur du dispositif de type MEMS peuvent être prévu sur ce même dispositif.

L'invention a été décrite en relation avec des formes de réalisations préférées, mais il va de soi que d'autres formes de réalisations sont envisageables. En particulier, les caractéristiques des différentes formes de réalisations décrites peuvent être combinées entre elles, s'il n'y a pas d'incompatibilités.

**Revendications**

1. Système de calcul de la fatigue totale ($D_{TOTAL}$) d'une pièce (7, 8, P, P', 9a, 6') d'un aéronef soumise à des contraintes mécaniques, le système comportant :

   - une pluralité de n capteurs de contraintes Ci, montés sur la pièce (7, 8, P, P', 9a, 6'), chaque capteur étant agencé pour détecter un seuil S(Ci) de contrainte mécanique prédéterminé et pour délivrer un signal (Si) de données représentatif du dépassement de ce seuil S(Ci),
   - des moyens (11) d'enregistrement de ces données,

   **caractérisé en ce que** les capteurs Ci sont agencés pour détecter des seuils S(Ci) d'une même contrainte différents les uns des autres et étagés de façon à permettre de calculer, à partir du nombre d'occurrences de dépassement du seuil de chaque capteur, une estimation de la fatigue de la pièce (7, 8, P, P', 9a, 6') due à la contrainte mécanique considérée,

   **en ce que** chaque capteur Ci est agencé pour mesurer le nombre d'occurrences N(Ci) de contraintes supérieures à leur seuil S(Ci), et pour permettre de calculer le nombre d'occurrence n(Ci) correspondant à des contraintes comprises entre le seuil S(Ci) du capteur Ci et le seuil supérieur S(Ci+1), selon la formule n(Cn) = N(Cn) ; pour i<n, n(Ci) = N(Ci) - N(Ci+1),

   et **en ce que** des moyens de calcul permettent de calculer pour chaque capteur Ci une fatigue équivalente (Di) pour la pièce correspondant à la gamme de contraintes comprise entre le seuil S(Ci) du capteur Ci et le seuil supérieur S(Ci+1), la fatigue totale ($D_{TOTAL}$) étant calculée en additionnant les fatigues équivalentes (Di) de chaque capteur Ci.

2. Système selon la revendication 1 qui comporte une unité de traitement (11) comportant les moyens d'enregistrement des données, les capteurs (Ci) comportant des moyens de transmission des données à l'unité de traitement (11).

3. Système selon la revendication 1 dans lequel chaque capteur (Ci) comporte des moyens d'enregistrement de données.

4. Système selon la revendication 3 qui comporte des moyens de transmission des données à des moyens (13) déportés d'analyse de ces données agencés pour calculer une estimation de la fatigue de la pièce (7, 8, P, P', 9a, 6').

5. Système selon l'une des revendications 1 à 4 dans lequel les capteurs (Ci) sont des capteurs de type MEMS.

6. Procédé de calcul de la fatigue totale ($D_{TOTAL}$) d'une pièce (7, 8, P, P', 9a, 6') d'un aéronef soumise à une contrainte mécanique particulière dans lequel :

   - on place sur la pièce des capteurs aptes à détecter des seuils prédéterminés S(Ci) de ladite contrainte mécanique, étagés les uns par rapport aux autres, et aptes, chacun, à délivrer un signal de données (Si) représentatif du dépassement de son seuil S(Ci) par ladite contrainte,
   - on enregistre le nombre N(Ci) d'occurrences de mesures de dépassement de chacun des seuils S(Ci),
   - on calcule le nombre d'occurrence n(Ci) correspondant à des contraintes comprises entre le seuil S(Ci) du capteur Ci et le seuil supérieur S(Ci+1), selon la formule n(Cn) = N(Cn) ; pour i<n, n(Ci) = N(Ci) - N(Ci+1),
   - on calcule pour chaque capteur Ci une fatigue équivalente (Di) pour la pièce correspondant à la gamme de contraintes comprise entre le seuil S(Ci) du capteur Ci et le seuil supérieur S(Ci+1), et
   - on calcule la fatigue totale ($D_{TOTAL}$) en additionnant les fatigues équivalentes (Di) de chaque capteur Ci.

7. Procédé selon la revendication 6 mis en oeuvre à l'aide du système de l'une des revendications 1 à 5.

8. Procédé de maintenance d'un aéronef comportant au moins une pièce (7, 8, P, P', 9a, 6') soumise à des contraintes mécaniques et un système de mesure de la fatigue totale (10) conforme au système de l'une des revendications 1 à 5, dans lequel :

   - on transmet au système (10) une requête de transmission des données enregistrées par le système (10),
   - on reçoit les données et
   - on calcule à partir de ces données une estimation de la fatigue totale de la pièce (7, 8, P, P', 9a, 6') due à chacune des contraintes mécaniques considérées.

9. Procédé de maintenance selon la revendication 8 dans lequel l'émission de la requête et la réception des données sont faites sans fil au moyen d'un appareil portable (13) d'émission/réception.

**Patentansprüche**

1. System zur Berechnung der gesamten Ermüdung ($D_{TOTAL}$) eines Teils (7, 8, P, P', 9a, 6') eines Flugzeugs, das mechanischen Belastungen ausgesetzt ist, wobei das System aufweist:

   - mehrere n Belastungssensoren Ci, die an dem Teil (7, 8, P, P', 9a, 6') angebracht sind, wobei jeder Sensor eingerichtet ist, einen Schwellwert S(Ci) der mechanischen Belastung zu erfassen, und ein vorgegebenes Datensignal (Si) auszugeben, das repräsentativ für das Überschreiten dieser Schwelle S(Ci) ist,
   - Mittel (11) zur Speicherung dieser Daten,

   **dadurch gekennzeichnet, dass** die Sensoren Ci angeordnet sind, um Schwellwerte S(Ci) der gleichen Belastung, die voneinander verschieden sind und stufenartig angeordnet sind, zu berechnen, um es zu ermöglichen, ausgehend von der Anzahl der Ereignisse des Überschreitens des Schwellwerts von jedem Sensor eine Schätzung der Ermüdung des Teils (7, 8, P, P', 9a, 6') aufgrund der betrachteten mechanischen Belastung zu berechnen, dass jeder Sensor Ci eingerichtet ist, die Anzahl der Ereignisse N(Ci) der Belastungen oberhalb von ihrem Schwellwert S(Ci) zu messen, und es zu ermöglichen, die Anzahl der Ereignisse n(Ci), die Belastungen entsprechen, die zwischen dem Schwellwert S(Ci) des Sensors Ci und dem oberen Schwellwert S(Ci + 1) liegen, nach der Formel n(Cn) = N(Cn) für i < n, n(Ci) = N(Ci) - N(Ci + 1) zu berechnen, und dass es die Berechnungsmittel ermöglichen, für jeden Sensor Ci eine äquivalente Ermüdung (Di) für das Teil zu berechnen, die dem Bereich der Belastungen entspricht, der zwischen dem Schwellwerts S(Ci) des Sensors Ci und dem oberen Schwellwert S(Ci + 1) liegt, wobei die gesamte Ermüdung ($D_{TOTAL}$) durch Addieren der äquivalenten Ermüdungen (Di) von jedem Sensor Ci berechnet wird.

2. System nach Anspruch 1, das eine Verarbeitungseinheit (11) umfasst, die Mittel zum Speichern von Daten umfasst, wobei die Sensoren (Ci) Mittel zur Übertragung von Daten an die Verarbeitungseinheit (11) aufweisen.

3. System nach Anspruch 1, wobei jeder Sensor (Ci) Mittel zur Speicherung von Daten umfasst.

4. System nach Anspruch 3, das Mittel (13) zur Übertragung der Daten zu deportierten Mitteln (13) zur Analyse von diesen Daten umfasst, die einberichtet sind, um eine Schätzung der Ermüdung des Teils (7, 8, P, P', 9a, 6') zu berechnen.

5. System nach einem der Ansprüche 1 bis 4, wobei die Sensoren (Ci) Sensoren vom Typ MEMS sind.

6. Verfahren zur Berechnung der gesamten Ermüdung ($D_{TOTAL}$) eines Teils (7, 8, P, P', 9a, 6') eines Flugzeugs, das einer besonderen mechanischen Belastung ausgesetzt ist, wobei:

   - auf dem Teil Sensoren platziert werden, die geeignet sind, vorbestimmte Schwellwerte S(Ci) der mechanischen Belastung zu erfassen, stufenförmig zueinander angeordnet sind und fähig sind, jeweils ein Datensignal (Si) zu liefern, das für das Überschreiten seiner Schwelle S(Ci) durch die Belastung repräsentativ ist,
   - Speichern der Anzahl N(Ci) der Ereignisse von Messungen eines Überschreitens von jedem der Schwellwerte S(Ci),
   - Berechnen der Anzahl der Ereignisse n(Ci), die Belastungen, die zwischen dem Schwellwert S(Ci) des Sensors Ci und dem oberen Schwellwert S(Ci + 1) liegen, nach der Formel n(Cn) = N(Cn) für i < n, n(Ci) = N(Ci) - N(Ci + 1) entsprechen,
   - Berechnen für jeden Sensor Ci einer äquivalenten Ermüdung (Di) für das Stück, die dem Bereich von Belastungen zwischen dem Schwellwert S(Ci) des Sensors Ci und dem oberen Schwellwert S(Ci + 1) entspricht, und
   - Berechnen der gesamten Ermüdung ($D_{TOTAL}$) durch Addieren der äquivalenten Ermüdungen (Di) von jedem Sensor Ci.

7. Verfahren nach Anspruch 6, das mit Hilfe des Systems nach einem der Ansprüche 1 bis 5 implementiert wird.

8. Verfahren zur Wartung eines Flugzeugs, das mindestens einen Teil (7, 8, P, P', 9a, 6'), das mechanischen Beanspruchung unterliegt, und ein System für die Messung der gesamten Ermüdung (10) gemäß dem System nach einem der Ansprüche 1 bis 5 umfasst, wobei:

- an das System (10) eine Anforderung zur Übertragung von Daten, die von dem System (10) gespeichert sind, übertragen wird,
- die Daten empfangen werden, und
- ausgehend von diesen Daten eine Schätzung der gesamten Ermüdung des Teils (7, 8, P, P', 9a, 6') aufgrund jeder der berücksichtigten mechanischen Belastungen berechnet wird.

**9.** Verfahren zur Wartung nach Anspruch 8, wobei die Übertragung der Anforderung und der Empfang von Daten drahtlos mittels eines tragbaren Geräts (13) zum Senden / Empfangen durchgeführt wird.

**Claims**

**1.** System for calculating the total fatigue ($D_{TOTAL}$) of an aircraft component (7, 8, P, P', 9a, 6') subjected to mechanical stresses, the system comprising:

- a plurality of n stress sensors Ci, mounted on the component (7, 8, P, P', 9a, 6'), each sensor being configured to detect a predetermined mechanical stress threshold S(Ci) and to deliver a data signal (Si) representative of the violation of this threshold S(Ci),
- means (11) for recording this data,

**characterised in that** the sensors Ci are configured to detect different thresholds S(Ci) of the same stress and staged for calculating, based on the number of threshold violation occurrences of each sensor, an estimate of fatigue of the component (7, 8, P, P', 9a, 6') due to the mechanical stress in question, wherein each sensor Ci is configured to measure the number of occurrences N(Ci) of stresses higher than their threshold S(Ci), and for calculating the number of occurrences n(Ci) corresponding to the stresses between the threshold S(Ci) of the sensor Ci and the higher threshold S(Ci+1), according to the formula n(Cn) = N(Cn); for i<n, n(Ci) = N(Ci)-N(Ci+1), and wherein the calculation means enables the calculation for each sensor Ci of an equivalent fatigue (Di) for the component corresponding to the range of stresses between the threshold S(Ci) of the sensor Ci and the higher threshold S(Ci+1), the total fatigue ($D_{TOTAL}$) being calculated by adding the equivalent fatigues(Di) of each sensor Ci.

**2.** System according to claim 1, which comprises a processing unit (11) comprising data-recording means, the sensors (Ci) comprising means for transmitting the data to the processing unit (11).

**3.** System according to claim 1, wherein each sensor (Ci) comprises data-recording means.

**4.** System according to claim 3, which comprises means for transmitting the data to the remote means (13) for analysing the data, configured to calculate an estimate of the fatigue of the component (7, 8, P, P', 9a, 6').

**5.** System according to one of the claims 1 to 4, wherein the sensors (Ci) are MEMS type sensors.

**6.** Method for calculating the total fatigue ($D_{TOTAL}$) of an aircraft component (7, 8, P, P', 9a, 6') subjected to particular mechanical stresses wherein:

- placed on the component are sensors capable of detecting the predetermined thresholds S(Ci) of said mechanical stress, staged relative to one another, and each being capable of delivering a data signal (Si) representative of the violation of its threshold S(Ci) by said stress,
- recorded is the number N(Ci) of occurrences of measurements of violation of each of the thresholds S(Ci),
- calculated is the number of occurrences n(Ci) corresponding to stresses between the threshold S(Ci) of the sensor Ci and the higher threshold S(Ci+1), according to the formula n(Cn) = N(Cn); for i<n, n(Ci) = N(Ci) - N(Ci+1),
- calculated for each sensor Ci is an equivalent fatigue (Di) for the component corresponding to the range of stresses between the threshold S(Ci) of the sensor Ci and the higher threshold S(Ci+1), and
- the total fatigue ($D_{TOTAL}$) is calculated by adding the equivalent fatigues (Di) of each sensor Ci.

**7.** Method according to claim 6 implemented using the system of one of the claims 1 to 5.

**8.** Method of maintenance for an aircraft comprising at least one component (7, 8, P, P', 9a, 6') subjected to mechanical stresses and a system of measurement of the total fatigue (10) in conformity with the system of one of the claims 1 to 5, wherein:

- transmitted to the system (10) is a request to transmit the data recorded by the system (10),
- the data is received and
- calculated based on this data is an estimate of the total fatigue of the component (7, 8, P, P', 9a, 6') due to each of the mechanical stresses in question.

9. Method of maintenance according to claim 8, wherein the request is transmitted and the data received wirelessly using a portable device (13) for transmission/receiving.

**Fig. 1**

**Fig. 2**

C1 —[ ]

S1

1 ⌐——————————————

0   1000  2000  3000  4000  5000    μdef(C1)
        S(C1)

C2 —[ ]

S2

1    ⌐—————————————

0   1000  2000  3000  4000  5000    μdef(C2)
            S(C2)

C3 —[ ]

S3

1        ⌐————————

0   1000  2000  3000  4000  5000    μdef(C3)
                S(C3)

C4 —[ ]

S4

1              ⌐———

0   1000  2000  3000  4000  5000    μdef(C4)
                    S(C4)

C5 —[ ]

S5

1                    ⌐

0   1000  2000  3000  4000  5000    μdef(C5)
                        S(C5)

*Fig. 3*

N

8000
7000
6000
5000
4000
3000
2000
1000

        C1    C2    C3    C4    C5

*Fig. 4*

**EP 2 502 047 B1**

## RÉFÉRENCES CITÉES DANS LA DESCRIPTION

### Documents brevets cités dans la description

- FR 2923540
- US 20020154029 A
- US 20070107530 A